Europäisches Patentamt

European Patent Office

Office européen des brevets

(19)

(11) Numéro de publication: **0 200 634**
**B1**

(12) **FASCICULE DE BREVET EUROPEEN**

(45) Date de publication du fascicule du brevet:
**14.09.88**

(21) Numéro de dépôt: **86400859.4**

(22) Date de dépôt: **22.04.86**

(51) Int. Cl.⁴: **F 16 D 13/68**

(54) **Amortisseur de torsion, notamment friction d'embrayage pour véhicule automobile.**

(30) Priorité: **30.04.85 FR 8506580**

(43) Date de publication de la demande:
**05.11.86 Bulletin 86/45**

(45) Mention de la délivrance du brevet:
**14.09.88 Bulletin 88/37**

(84) Etats contractants désignés:
**DE IT**

(56) Documents cités:
**FR - A - 1 346 144**
**FR - A - 2 075 659**
**FR - A - 2 183 390**
**FR - A - 2 412 002**
**FR - A - 2 526 906**
**GB - A - 2 090 372**
**GB - A - 2 107 431**

(73) Titulaire: **VALEO, 64 Avenue de la Grande Armée,
F-75017 Paris (FR)**

(72) Inventeur: **Despres, Dominique, 24, Avenue du Général
Roguet, F-92110 Clichy (FR)**

(74) Mandataire: **Gamonal, Didier, Société VALEO Service
Propriété Industrielle 21, rue Blanqui, F-93406 Saint
Ouen (FR)**

ACTORUM AG

## Description

La présente invention concerne les amortisseurs de torsion, notamment les frictions d'embrayage pour véhicule automobile, du genre comportant un élément d'entrée, un élément de sortie et au moins deux dispositifs amortisseur de torsion, interposés entre l'élément d'entrée et l'élément de sortie, comportant chacun au moins une rondelle de guidage accouplée élastiquement à un voile. Ainsi qu'on le sait, un dispositif amortisseur de torsion comporte au moins deux parties coaxiales montées mobiles l'une à l'autre dans les limites d'un secteur de debattement angulaire déterminé et à l'encontre de moyens élastiques.

En pratique, l'une des partie comporte un voile, l'autre deux rondelles de guidage accouplées élastiquement audit voile et disposées de part et d'autre de celui-ci.

S'agissant d'une friction d'embrayage l'élément d'entrée comporte un disque de friction doté d'un voile muni latéralement, de part et d'autre, de garnitures de frottement et l'élément de sortie comporte un moyeu et/ou ledit voile.

Un tel amortisseur de torsion avec deux dispositifs amortisseur de torsion est déscrit par exemple dans le brevet FR-A-2 075 659 déposé le 18 janvier 1971. Dans le mode de réalisation de la figure 1 de ce document, les deux dispositifs amortisseur de torsion sont reliés rigidement entre eux par des rivets en combinaison avec des douilles d'espacement.

Une telle disposition n'est pas entièrement satisfaisante car elle est radialement encombrante et/ou d'un montage non aisé.

La présente invention a pour objet de pallier ces inconvénients tout en procurant d'autres avantages.

Suivant l'invention un dispositif amortisseur de torsion du type sus indiqué est caractérisé en ce que chaque dispositif amortisseur de torsion comporte au moins une rondelle, dite rondelle interne, qui présente à sa périphérie externe, de place en place, au moins deux tenons engagés chacun dans un évidement ouvert d'une couronne, s'étendant globalement axialement, solidaire d'une rondelle appartenant à l'élément d'entrée, dite rondelle porteuse, et qui est logée à l'intérieur d'une boîte délimitée, d'une part, par la rondelle porteuse et sa couronne et, d'autre part, par une rondelle, dite rondelle de fermeture, liée à la couronne.

Grâce à la disposition selon l'invention une facilité de montage par enfilage axial, ainsi qu'un faible encombrement axial sont obtenus. On appréciera en outre que le nombre de pièce est réduit.

Suivant une autre caractéristique les rondelles de guidage internes sont maintenues à distance l'une de l'autre par des moyens d'entretoise.

Suivant une autre caractéristique les moyens d'entretoise consistent en des emboutis que présente en correspondance chacune des rondelles internes.

Suivant une autre caractéristique les moyens d'entretoise consiste en une virole engagée radialement sous la couronne et s'appuyant sur la périphérie externe des rondelles internes. En variante les moyens d'entretoise comportent des épaulements situés à distance axiale les uns des autres et réalisés à la faveur des évidements.

Suivant une autre caractéristique une ceinture est prévue pour renforcer la couronne. Une bonne rigidité de l'ensemble est ainsi obtenue. On appréciera qu'un décalage entre les deux dispositifs amortisseur, contrairement à la réalisation du sus mentionné document FR-20 75 659, n'est pas à craindre ce qui procure un gain de transmission de couple.

Suivant une autre caractéristique cette ceinture forme une entretoise entre deux rondelles de guidage.

Suivant une autre caractéristique cette ceinture consiste en une virole portée par la périphérie externe de la couronne.

Suivant une autre caractéristique chacun des voiles a en coupe une forme en L et est engagé par un montage à cannelure sur un moyen.

Grâce à cette disposition, outre la facilité et le grand nombre de possibilités de montage, un ménagement des cannelures que possède en pratique l'arbre mené pour sa liaison en rotation avec le moyeu de l'amortisseur est ainsi obtenu. De plus il est possible de doter aisément l'amortisseur d'un dispositif d'amortissement des vibrations dites de ralenti.

Les caractéristiques et avantages de l'invention ressortiront d'ailleurs de la description qui va suivre, en référence aux dessins schématiques annexés sur lesquels:

— la figure 1 est une demi-vue en coupe axiale de l'amortisseur de torsion selon l'invention;

— la figure 2 est une vue en coupe axiale de la couronne et de sa rondelle porteuse que comporte l'amortisseur de torsion suivant l'invention;

— la figure 3 est une vue partielle suivant la flèche III de la figure 1;

— la figure 4 est une vue analogue à la figure 3 pour une autre variante de réalisation;

— la figure 5 est également une vue analogue à la figure 3 pour une autre variante de réalisation;

— la figure 6 est une vue analogue à la figure 1 pour une autre réalisation;

— la figure 7 est une vue partielle selon la flèche VI de la figure 6;

— la figure 8 est une vue analogue à la figure 1 pour encore une autre variante de réalisation;

— la figure 9 est une vue partielle selon la flèche IX de la figure 8.

Sur ces figures, l'amortisseur de torsion auquel est appliqué l'invention constitue, à titre d'exemple, une friction d'embrayage à moyeu amortisseur qui est notamment destinée aux embrayages pour véhicules automobiles, en particulier pour véhicules automobiles lourds ou industriels.

Cette friction comporte un élément d'entrée E comprenant un disque de friction 1 propre à être serré entre deux plateaux, non représentés, solidaires en rotation d'un arbre menant, par exemple le vilebrequin du moteur.

Le disque de friction est formé d'un voile 2, qui à sa périphérie interne est rapporté par des rivets 3 sur la face externe d'une rondelle de guidage 4, tandis que, à sa périphérie externe, il est muni latéralement de part et d'autre de garniture de frottement 5.

Cette friction comporte également un élément de sortie S comprenant ici un moyeu 6 doté d'un alésage interne cannelé 7, pour liaison en rotation avec un arbre mené, par exemple l'arbre d'entrée de la boîte de vitesse, et à sa périphérie externe de cannelures 26 pour liaison en rotation avec des voiles 8,8' de manière déscrite ci-après. Entre l'élément d'entrée E et l'élément de sortie S sont interposés au moins deux dispositifs amortisseur de torsion comportant chacun au moins une rondelle de guidage accouplée élastiquement à un voile de moyeu.

Plus précisément le premier dispositif amortisseur de torsion comporte outre la rondelle de guidage 4, à distance, une autre rondelle de guidage 9 solidaire en rotation de celle-ci.

Les deux rondelles 4, 9 sont dotées de logements sous forme d'emboutis alternés 10 ménagés alternativement axialement dans un sens et dans l'autre en correspondance de l'une à l'autre de celle-ci.

En outre ces rondelles 4, 9 sont disposées de part et d'autre du voile 8, qui possèdent des fenêtres 11 dans lesquels sont logés des moyens élastiques, ici des ressorts à boudin 12 allongés sensiblement tangentiellement à une même circonférence de l'ensemble; lesdites ressorts 12 étant disposés également pour partie dans les emboutis 10, en regard des fenêtres 11.

Ces dispositions étant connues, notamment par la demande de brevet FR 2 514 446, déposée le 14 octobre 1981, elles ne seront pas décrites plus en détail ici.

Il suffira de préciser qu'ainsi le premier dispositif amortisseur de torsion comporte deux rondelles de guidage 4, 9 accouplées élastiquement au voile 8 par des moyens élastiques 12.

Le deuxième dispositif amortisseur de torsion a une structure analogue à celle du premier dispositif à savoir: deux rondelles de guidage 13, 9' disposées de part et d'autre du voile 8' et solidaires en rotation l'une de l'autre, ainsi que des ressorts à boudin 12' disposés dans des logements pour partie dans des emboutis alterné 10 des rondelles de guidage 9', 13 et pour partie dans des fenêtres 11' en correspondance du voile 8'.

Suivant l'invention un dispositif amortisseur de torsion du type sus indiqué est caractéristé en ce que chaque dispositif amortisseur de torsion comporte au moins une rondelle dite rondelle interne, qui présente à sa périphérie externe, de place en place, au moins deux tenons engagés chacun dans un évidement ouvert d'une couronne, s'étendant globalement axialement, solidaire d'une rondelle appartenant à l'élément d'entrée, dite rondelle porteuse, et qui est logée à l'intérieur d'une boîte delimitée, d'une part, par la rondelle porteuse et sa couronne et d'autre part, par une rondelle, dite rondelle de fermeture, liée à la couronne.

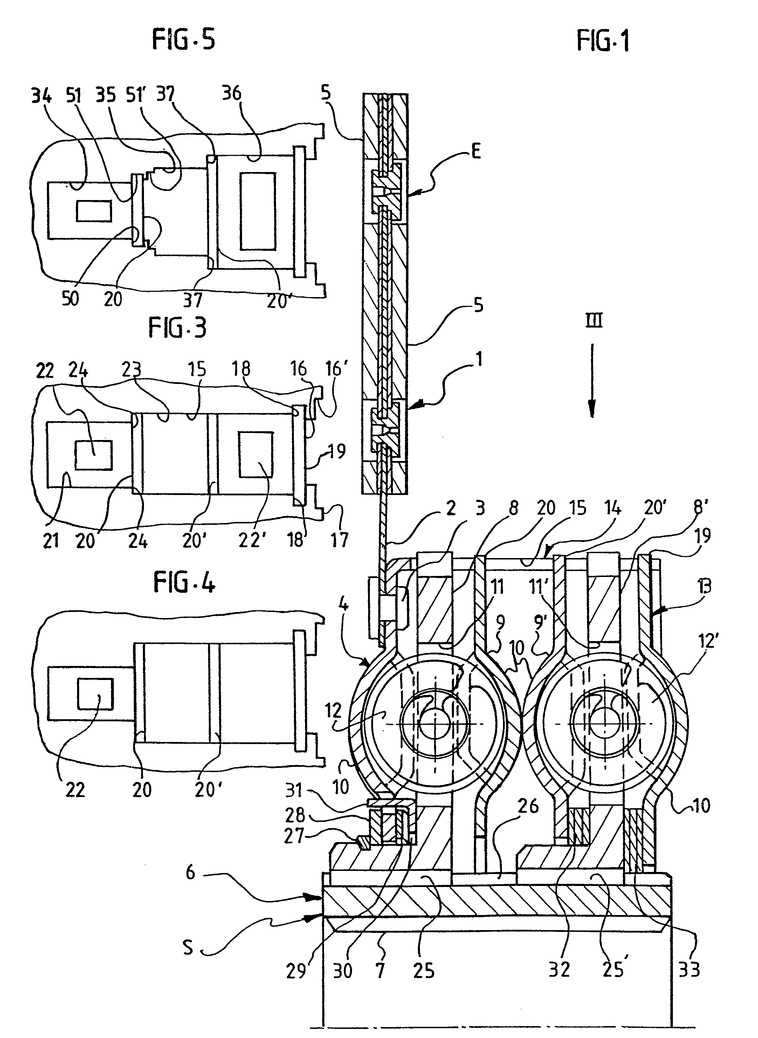

Dans le mode de réalisation des figures 1 à 3, les rondelles de guidage 9 et 9' constituent les rondelles internes, la rondelle de guidage 4, la rondelle porteuse et la rondelle 13, la rondelle de fermeture. La rondelle porteuse 4 est solidaire à sa périphérie externe d'une couronne 14, qui s'étend globalement axialement et radialement au-delà des voiles 8, 8'. Dans la forme de réalisation représentée, cette couronne 14 est d'un seul tenant avec la rondelle porteuse 4, l'ensemble étant venu par exemple d'un même flanc convenablement découpé et embouti et porte le disque de friction 1 grâce aux rivets 3. Ces rivets 3 sont disposés radialement à l'intérieur de la couronne 14 sur une circonférence de diamètre inférieur à celui de ladite couronne ce qui favorise une réduction de l'encombrement radial de l'amortisseur de torsion.

En outre la couronne 14 est dotée d'évidements 15 ouverts s'étendant axialement, qui débouchent, le long du bord libre 17 de celle-ci, chacun dans une échancrure 16 formant un épanouissement desdits évidements 15 et donc des épaulements 18 au niveau du fond de l'échancrure 16.

En pratique plus de deux évidements 15 sont prévus et la couronne 14 a une forme de peigne avec une âme continue adjacente à la rondelle porteuse 4 et des branches issues de cette âme et délimitant les évidements 15, comme mieux visible à la figure 2.

La rondelle de fermeture 13 présente, pour liaison avec la couronne 14, radialement à sa périphérie externe, de place en place, au moins deux tenons 19 par lesquels elle est engagée et sertie, suivant des dispositions de celles déscrites dans le brevet FR-A-2 411 999 déposé le 13 décembre 1977, dans les échancrures 16.

Ainsi l'ensemble 4-14-13 forme après montage une boîte à l'extérieur de laquelle est fixé le voile 2 par les rivets 3 sur la face extérieure de la rondelle porteuse 4 tournée à l'opposé de la rondelle de fermeture 13.

Plus précisément, l'échancrure 16 a une profondeur supérieure à l'épaisseur des tenons 19 et le sertissage, lesdits tenons 19 étant en appui contre les épaulements 18, consiste en un fluage de matière prélévée dans l'un au moins des bords de l'échancrure 16, en pratique dans les deux, pour empiètement sur les tenons 19 (figure 3). Ainsi après sertissage un épanouissement 16' est formé au niveau du bord libre 17. Dans les évidements 15 sont engagés des tenons 20, 20' que présentent respectivement les rondelles internes 9, 9'. Ces tenons 20, 20' sont engagés ici à léger jeu dans les évidements 15 pour liaison en rotation avec la couronne 14. En pratique, les rondelles de guidages 9, 9' sont identiques et l'évidement 15 a une forme étagée avec une portion d'extrémité 21 fermée, proche de la rondelle porteuse 4, de moindre largeur, dans laquelle est engagé à jeu un ergot 22 que présente le voile 8 à sa periphérie. C'est dans sa portion plus large 23, qui communique avec léchancrure 16, que sont engagés à léger jeu les tenons 20, 20'. Les tenons 20 prennent appui sur les épaulements 24 formés à la junction des portions 21 et 23 de l'évidement 15. La portion 23 est de largeur constante et donc les tenons 20 et 20' ont la même largeur en étant identiques entre eux. Dans l'évidement 15 est engagé, entre les tenons 19, 20', également un ergot 22' que présente le voile 8'. Cet ergot 22' est plus large que l'ergot 22. Les voiles 8, 8' ont en coupe axiale une forme de L et sont montés sur le moyeu 6 grâce à des cannelures 25, 25', qu'ils présentent, engagées sans jeu sur les cannelures 26 du moyeu 6. Ainsi qu'on l'aura compris les ergots 22, 22', en fonctionnement, limitent le débattement angulaire entre la partie rondelle de guidage 4-9, 9'-13 et la partie voile 8-8' — moyeu 10 mobiles l'une par rapport à l'autre à l'encontre des moyens élastiques 12-12'.

Dans ce cas la partie rondelle de guidage appartient donc à l'élément d'entrée et partie voile et moyeu à l'élément de sortie.

La limitation du débattement angulaire pour un mode de fonctionnement se produit par coopération des ergots 22, 22' avec le bord concerné de l'évidement 15 et c'est la raison pour laquelle les ergots 22' ont une dimension supérieure à celle des ergots 22 afin que lesdits ergots 22, 22' soient engagés avec le même jeu dans les évidements 15. De cette manière les deux dispositifs amortisseur de torsion travaillent en parallèle.

Des moyens de frottement sont en outre prévus pour chaque dispositif amortisseur; plus précisement la base du L du voile 8 traverse l'ouverture centrale de la rondelle 4 et le montage comporte, par rapport au voile 8, une rondelle de frottement 28 disposée au contact de la face externe de la rondelle 4, une rondelle élastique 29 et une rondelle d'application 30 disposées entre la rondelle 4 et le voile 8.

La rondelle d'application 30 est solidaire en rotation de la rondelle 4 grâce à des pattes 31 engagées dans des ouvertures que présente ladite rondelle 4 à cet effet.

Entre le voile 8' et la rondelle interne 9' est disposée une rondelle de frottement 32 et de même une rondelle de frottement 33 est logée entre le voile 8' et la rondelle de fermeture 13. On notera que ces rondelles 32, 33 jouent pour le voile 8' le rôle de rondelles d'écartements et définissent la position axial dudit voile 8'.

Enfin dans ce mode de réalisation les rondelles internes 9,9' sont positionnées axialement à distance l'une de l'autre, par leurs emboutis 10 au contact les uns des autres formant moyens d'entretoise; la distance axiale entre les rondelles 9' et 13 étant déterminée par l'épaisseur du voile 8' et par celle des rondelles d'écartement 32, 33 tandis que la position de la rondelle 9 est déterminée par appui des tenons 20 contre les épaulements 24.

La variante de réalisation de la figure 4 diffère de la précédente par le fait que le voile 8' est dépourvu d'ergots 22'.

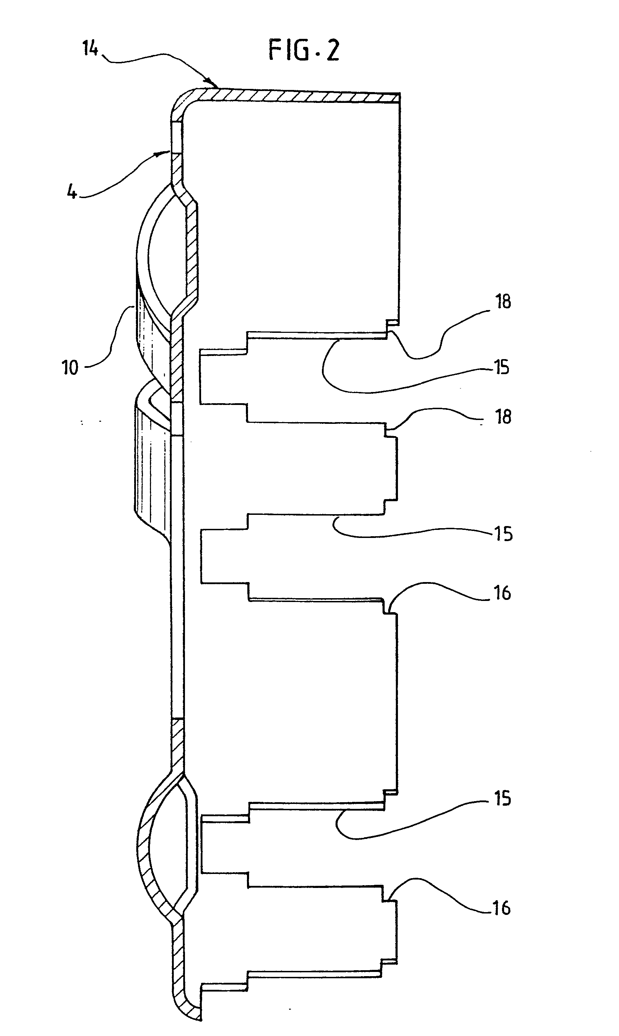

Celle de la figure 5 diffère de la figure 3 par le sertissage des tenons 20 de manière analogue au sertissage des tenons 19. Ainsi dans ce cas l'évidement 15 possède quatre portions étagées 34, 51, 35, 36 de largeur croissante; les tenons 20' étant en appui contre des épaulements 37 formés à la jonction des portions 35 et 36, et les tenons 20 s'appuient contre des épaulements 50 formé à la jonction des portions 34, 51.

Bien entendu dans ce cas les tenons 20' ont une largeur supérieure à celle des tenons 20 et la position axiale des deux rondelles 9, 9' est assurée par les épaulements 37, 50 axialement distant, appartenant aux moyens d'entretoise , et non plus par les emboutis 10 alors à distance l'un de l'autre.

De plus, le sertissage des tenons 20 étant effectué par fluage de matière prélevé dans la portion 51, un épanouissement 51' de ladite portion 51 apparaît après sertissage.

Dans cette réalisation la rondelle interne 9 est donc liée axialement à la couronne 14 par immobilisation axial des tenons 20 entre les épaulements 50 et la matière prélevée lors du sertissage dans la portion 51, tandis que la rondelle interne 9' est immobilisée axialement, d'une part, par appui des tenons 20' contre les épaulements 37 et, d'autre part, dans l'autre sens axial via les rondelles 32, 33, le voile 8' par sertissage des tenons 19 de la rondelle de fermeture 13.

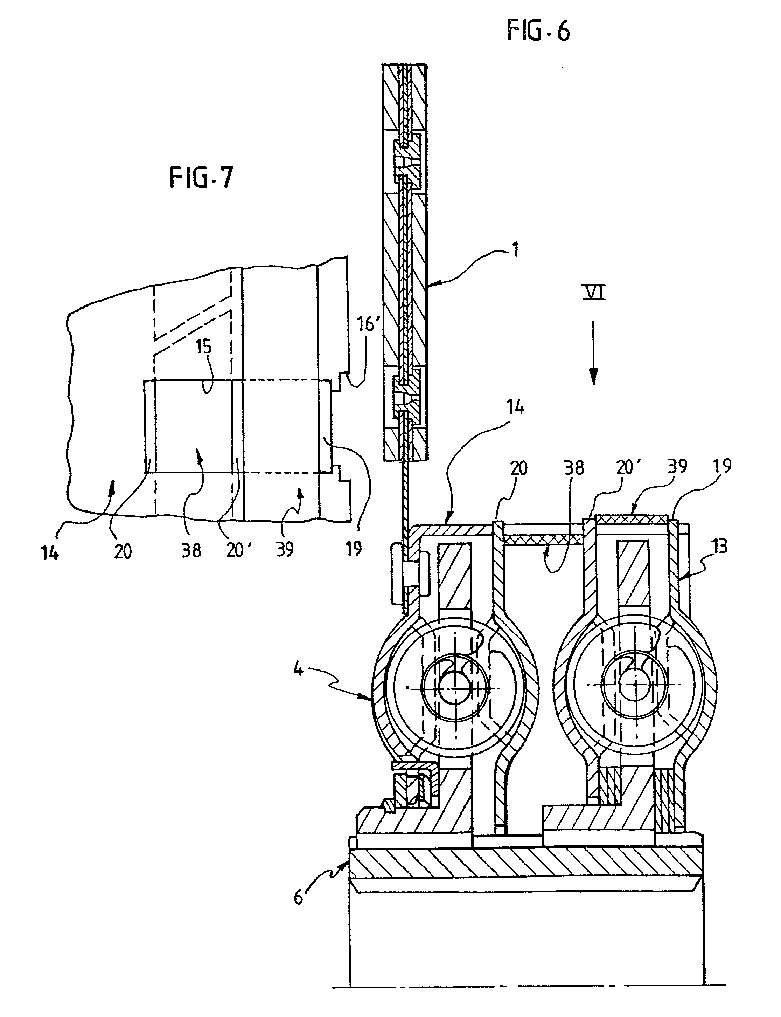

Dans le mode de réalisation des figures 6 et 7 les moyens d'entretoise consistent en une virole fendue 38 engagée radialement sous la couronne 14 au contact de celle-ci; les emboutis 10 étant à distance l'un de l'autre. De plus, la couronne 14 est renforcée par une ceinture 39 portée par celle-ci et décalée par rapport à la tranche des tenons 19 de la rondelle de fermeture 13. Ici cette ceinture 39 est disposée sur la face externe de la couronne 14 et consiste en une virole 39 solidarisée par exemple par soudage ou emmanchement à la force sur la couronne 14.

Cette ceinture 39 est disposée, tout entière, axialement du côté de la face de la rondelle de fermeture 13 tournée vers la rondelle porteuse 4.

De plus elle constitue une entretoise axiale entre les rondelles 13 et 9'. On appréciera que dans ce cas la ceinture offre un épaulement pour les tenons 19, et donc que ceux-ci peuvent avoir la même largeur que les tenons 20, 20' ; l'évidement 15 étant dans ce cas axialement de largeur constante avant montage, un épanouissement 16' de l'évidement 15 étant formé après sertissage des tenons 19 comme visible à la figure 7. Dans ce cas la ceinture 39 remplace avantageusement les épaulements 18 de la figure 3 en offrant une surface d'appui supérieure.

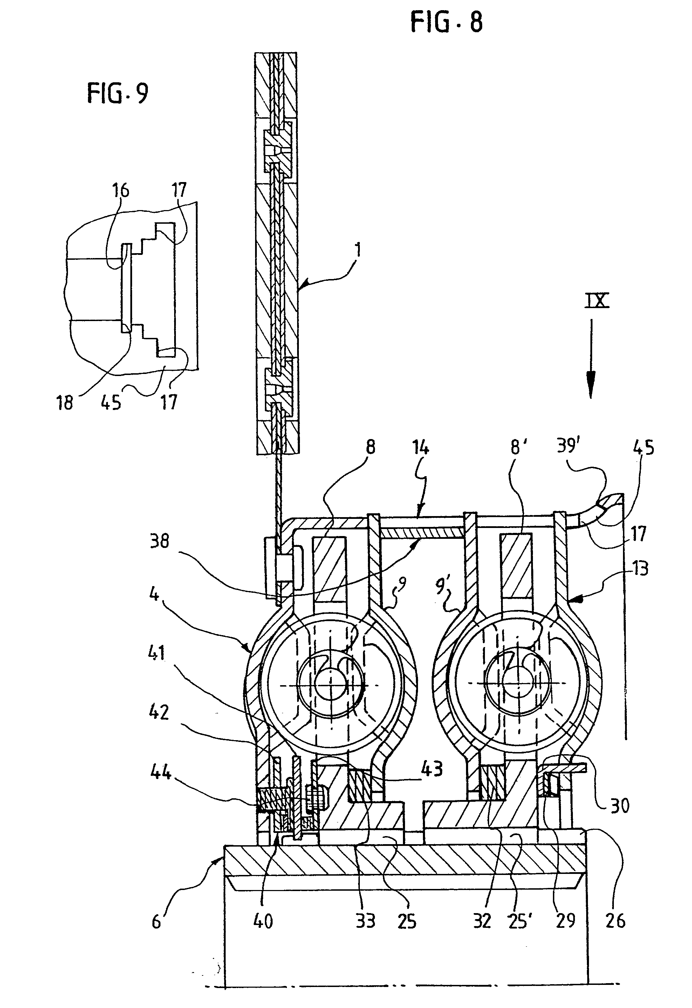

Dans le mode de réalisation de la figure 8 la ceinture 39' est d'un seul tenant avec la couronne 14 en étant disposée axialement tout entière du côté de la face de la rondelle 13 tournée à l'opposé de la rondelle porteuse radialement au-dessus des tenons 19, 20, 20' en se raccordant à la partie courante de la couronne 14 par une zone inclinée 45. Le bord libre 17, dans lequel les évidements ouverts 15 débouchent, est donc défini par l'extrémité de la partie courante de la couronne 14 en dehors des zones inclinées 45 comme indiqué à la figure 9.

De plus, un dispositif amortisseur de torsion 40 pour les vibrations dites de ralenti est interposé entre la rondelle 4 et le voile 8. Ce dispositif est du type de celui décrit dans la demande de brevet FR-A-2 551 813 du 14 septembre 1983 et ne sera pas décrit plus en détail ici. Il suffira de se rappeler qu'il est logé entre la rondelle 4 et le voile 8, qu'il comporte un voile 41, solidaire du moyeu 6, deux rondelles de guidage 42, 43 disposées de part et d'autre dudit voile 41 et accouplées élastiquement à celui-ci par des ressorts non représentés.

Les deux rondelles de guidage 42, 43 sont solidaires l'une de l'autre par des rivets (non représentés) et la rondelle de guidage 43 est liée en rotation au voile 8 par des pions cylindriques 44 engagés dans celui-ci. Dans cette variante la rondelle ondulée 29 et la rondelle 30 sont disposées entre le voile 8' et la rondelle de fermeture 13. Les voiles 8, 8' sont montés à jeu par leurs cannelures 25, 25' sur les cannelures 26 du moyeu 6, en outre la rondelle 32 est montée entre le voile 8' et la rondelle 9', la rondelle 33 entre le voile 8 et la rondelle 9. La base du L du voile au lieu d'être tournée vers la rondelle 4, est tournée vers la rondelle de fermeture 13 et la base du voile 8', en sorte que lesdites bases sont tournées l'une vers l'autre.

Dans cette réalisation il y a donc trois parties coaxiales montées mobiles l'une par rapport à l'autre et comprenant la première le voile 41 et le moyeu 6 appartenant à l'élément de sortie, la deuxième les voiles 8, 8' et enfin la troisième les rondelles 4, 9, 9', 13 appartenant à l'élément d'entrée. Bien entendu la présente invention n'est pas limitée aux exemples de réalisation déscrits mais englobe toute variante de réalisation.

En particulier plus de deux dispositifs amortisseur de torsion peuvent être prévus et donc plus de deux rondelles internes peuvent être montées dans la couronne 14 façonnée en conséquence. Dans ce cas l'un des dispositifs peut être doté de rondelles à tenons engagés à jeu dans les évidements 15 pour n'intervenir qu'après un certain débattement.

On appréciera qu'il ressort à l'evidence de la description outre la possibilité pour, par exemple, un plateau de pression de venir au plus près de la couronne 14, que le montage des rondelles internes 9, 9' se fait par empilage axial dans les évidements 15 et est facilité par l'assemblage des voiles 8, 8' sur le moyeu cannelé 6 ce qui ménage les cannelures de l'arbre mené. De même la virole 38 peut jouer le rôle de ceinture pour renforcement de la couronne 14 en étant, par exemple, soudée à celle-ci. Ladite couronne 14 peut présenter un décalage radial lorsque les voiles 8, 8' n'ont pas le même diamètre ou être légèrement coniques en s'étendant globalement axialement et radialement au delà des voiles 8, 8'. On notera que dans tous les cas cette couronne évidée relie axialement à écartement fixe la rondelle porteuse 4 et la rondelle de fermeture 13 et constitue donc une entretoise tout en favorisant une bonne ventilation.

## Revendications

1. Amortisseur de torsion, notamment friction d'embrayage pour véhicule automobile, du genre comportant un élément d'entrée (E), un élément de sortie (S) et au moins deux dispositifs amortisseur de torsion, interposés entre l'élément d'entrée et l'élément de sortie, comportant chacun au moins une rondelle de guidage accouplée élastiquement à un voile, caractérisé en ce que chaque dispositif amortisseur de torsion comporte au moins une rondelle, dite rondelle interne (9, 9'), qui présente à sa périphérie externe, de place en place, au moins deux tenons (20, 20'), engagés chacun dans un évidement ouvert (15) d'une couronne (14), s'étendant globalement axialement, solidaire d'une rondelle (4) appartenant à l'élément d'entrée (E), dite rondelle porteuse, et qui est logée à l'intérieur d'une boîte délimitée, d'une part, par la rondelle porteuse (4) et sa couronne (14) et, d'autre part, par une rondelle (13), dite rondelle de fermeture, liée à la couronne.

2. Amortisseur de torsion selon la revendication 1, caractérisé en ce que les rondelles de guidage internes (9, 9') sont maintenues à distance l'une de l'autre par des moyens d'entretoise.

3. Amortisseur de torsion selon la revendication 2, caractérisé en ce que les moyens d'entretoise consistent en des emboutis (10) que présente en correspondance chacune des rondelles internes (9, 9').

4. Amortisseur de torsion selon la revendication 2, caractérisé en ce que les moyens d'entretoise consistent en une virole (38) engagé radialement sous la couronne (14) et s'appuyant sur la périphérie externe des rondelles internes (9, 9').

5. Amortisseur de torsion selon la revendication 2, caractérisé en ce que les moyens d'entretoise comportent des épaulements (37, 50) situés à distance axiale les uns des autres et formés à la faveur des évidements (15).

6. Amortisseur de torsion selon l'une des revendications 1 à 5, caractérisé en ce que au moins une ceinture (39) est prévue pour renforcer la couronne.

7. Amortisseur de torsion selon la revendication 6, caractérisé en ce que cette ceinture (39) forme une entretoise entre deux rondelles de guidage (9', 13).

8. Amortisseur de torsion selon l'une quelconque des revendications 1 à 7, caractérisé en ce que chacun des voiles (8, 8') a en coupe une forme en L et est engagé par un montage à cannelure (25, 25') sur un moyeu 6.

## Patentansprüche

1. Schwingungsdämpfer, insbesondere Kupplungsscheibe für Kraftfahrzeug, bestehend aus einer Eingangswelle (E), einer Ausgangswelle (S) und mindestens zwei Schwingungsdämpfern zwischen Ein- und Ausgang mit je mindestens einer Passscheibe, die federnd mit einer Schüssel verbunden ist. Das System wird dadurch gekennzeichnet, dass jeder Schwingungsdämpfer mindestens eine sogenannte Innenscheibe (9, 9') mit mindestens zwei Zapfen (20, 20') in gleichmässigen Abständen am äusseren Rand umfasst; die Zapfen greifen jeweils in eine offene Kerbe (15) eines axial verschiebbaren Scheibenkranzes (14). Der Kranz ist kraftschlüssig mit Scheibe (4) — auch Trägerscheibe genannt — am Eingang (E) verbunden und in einem Gehäuse untergebracht, das auf einer Seite durch die Trägerscheibe (4) und den Scheibenkranz (14), auf der anderen Seite durch Scheibe (13) — auch Treibscheibe genannt und mit dem Kranz verbunden — begrenzt wird.

2. Schwingungsdämpfer nach Anspruch 1, dadurch gekennzeichnet, dass die Innenscheiben (9, 9') durch geeignete Distanzringe voneinander getrennt sind.

3. Schwingungsdämpfer nach Anspruch 2, dadurch gekennzeichnet, dass die Distanzringe nicht separat sind, sondern aus Pressteilen (10) bestehen, die mit den Scheiben (9, 9') aus einem Stück gepresst werden.

4. Schwingungsdämpfer nach Anspruch 2, dadurch gekennzeichnet, dass die Distanzringe aus einem Gussring (38) bestehen, der radial unter Scheibenkranz (14) greift und auf dem Aussenrand der Innenscheiben (9, 9') aufliegt.

5. Schwingungsdämpfer nach Anspruch 2, dadurch gekennzeichnet, dass die Distanzringe Nuten (37, 50) in axialem Abstand umfassen, die den Kerben (15) entsprechen.

6. Schwingungsdämpfer nach einem der Ansprüche 1 bis 5, dadurch gekennzeichnet, dass zur Verstärkung des Kranzes mindestens ein Führungsring (39) vorgesehen ist.

7. Schwingungsdämpfer nach Anspruch 6, dadurch gekennzeichnet, dass der Führungsring (39) zwischen zwei Führungsscheiben (9', 13) ein Abstandsstück bildet.

8. Schwingungsdämpfer nach einem der Ansprüche 1 bis 7, dadurch gekennzeichnet, dass jede Schüssel (8, 8') im Schnitt L-förmig ausgebildet ist und mit Zahnung (25, 25') in eine Kerbzahnnabe (6) greift.

### Claims

1. A torsion damper, in particular for a friction clutch for a motor vehicle, of the type comprising an input component (E), an output component (S) and at least two torsion damper devices interposed between the input and the output component, each comprising at least one guide washer coupled elastically to a disc, characterised in that each torsion damper device comprises at least one washer, called an internal washer (9, 9'), which is provided in places on its outer periphery with at least two tenons (20, 20') each engaged in an open recess (15) of a collar (14) extending substantially axially and rigid with a washer (4) beloging to the input component (E), called a bearing washer, and which is housed inside a box bounded, on one hand, by the bearing washer (4) and its collar (14) and, on the other hand, by a washer (13), called a closure washer, linked to the collar.

2. A torsion damper as claimed in Claim 1, characterised in that the internal guide washers (9, 9') are kept at a distance from one another by spacer means.

3. A torsion damper as claimed in Claim 2, characterised in that the spacer means comprise pressings (10) borne correspondingly by each of the internal washers (9, 9').

4. A torsion damper as claimed in Claim 2, characterised in that the spacer means comprise a sleeve (38) engaged radially below the collar (14) and bearing on the outer periphery of the internal washers (9, 9').

5. A torsion damper as claimed in Claim 2, characterised in that the spacer means comprise shoulders (37, 50) located at an axial distance from one another and formed via the recesses (15).

6. A torsion damper as claimed in any one of Claims 1 to 5, characterised in that at least one belt (39) is provided to strengthen the collar.

7. A torsion damper as claimed in Claim 6, characterised in that this belt (39) forms a spacer member between two guide washers (9', 13).

8. A torsion damper as claimed in any one of Claim 1 to 7, characterised in that each of the discs (8, 8') has an L-shaped section and is engaged via a grooved mounting (25, 25') on a hub (6).

0 200 634

FIG·5

FIG·1

FIG·3

FIG·4

7

# FIG·2

14

4

10

18

15

18

15

16

15

16

FIG·7

FIG·6

FIG · 8

FIG · 9